# EUROPÄISCHE PATENTSCHRIFT

(11) **EP 1 243 872 B1**
(45) Veröffentlichungstag und Bekanntmachung des Hinweises auf die Patenterteilung: **30.07.2008**
(21) Anmeldenummer: 02005943.2
(22) Anmeldetag: 15.03.2002
(51) Int. Cl.: F24J 2/07

(54) **Solarempfänger**
Solar receiver
Récepteur solaire

(30) Priorität: 21.03.2001 DE 10113637
(43) Veröffentlichungstag der Anmeldung: 25.09.2002
(73) Patentinhaber: Deutsches Zentrum für Luft- und Raumfahrt e.V., 51147 Köln (DE)
(72) Erfinder: Hoffschmidt, Bernhard, 51467 Bergisch Gladbach (DE); Rietbrock, Peter, 51147 Köln (DE)
(74) Vertreter: Selting, Günther

(56) Entgegenhaltungen:
- WO-A-01/61254
- WO-A-97/11321
- DE-A- 3 420 118
- DE-A- 4 418 951
- DE-A- 19 744 541
- US-A- 4 155 981
- US-A- 4 394 859

## Beschreibung

Die Erfindung betrifft einen Solarempfänger mit zahlreichen porösen Absorberkörpern, die an der Frontseite einer Doppelwand angeordnet und mit durch die Doppelwand hindurchgehenden Rohren verbunden sind, welche in einen Sammler führen, und mit einem in der Doppelwand enthaltenen Hohlraum, der einen Kühllufteinlass und zahlreiche die Rohre umgebene Kühlluftauslasse aufweist.

In einem solarthermischen Kraftwerk gemäß DE 197 44 541 A1 wird die einfallende Solarstrahlung von Heliostaten oder Kollektoren auf einen Solarempfänger, der üblicherweise aus einer Vielzahl von keramischen Absorberkörpern zusammengesetzt ist, gebündelt.

Die auf die Absorberkörper auftreffende hochkonzentrierte Solarstrahlung erwärmt die Absorberkörper auf Temperaturen von über 1000°C. Die Absorberkörper bestehen aus hochtemperaturbeständiger Keramik. Sie sind porös. Durch die Absorberkörper hindurch kann Umgebungsluft angesaugt werden, die sich in den Absorberkörpern auf etwa 800°C erwärmt, und durch ein Rohr in einen Sammler geleitet wird. Der Sammler ist mit einem Wärmetauscher verbunden. Nachdem die Luft den Wärmetauscher passiert hat, ist sie auf etwa 200°C abgekühlt. Sie kann als Kühlluft in den Hohlraum einer die Absorberkörper tragenden Doppelwand eingeleitet werden. Aus dieser Doppelwand tritt die Kühlluft zwischen den Absorberkörpern aus, um an der frontseitigen Empfängerfläche wieder in die Absorberkörper eingesaugt zu werden. Auf diese Weise wird durch vorgeheizte Kühlung eine gute Wärmeausnutzung erreicht.

Bei dem bekannten Solarempfänger bildet die Rückenwand der Doppelwand eine Tragstruktur, an der sämtliche Elemente des Solarempfängers befestigt sind. Diese Tragstruktur besteht im Wesentlichen aus einem Blech, das mit einer Isolation belegt ist. Die Frontwand der Doppelwand besteht lediglich aus einem Leitkörper, der jedoch keine tragende Funktion für andere Komponenten hat. Bei einem großflächigen Solarempfänger müsste zur Erzielung der erforderlichen Festigkeit die Rückenwand mit einer Verstärkung versehen werden. Hinter der Rückenwand befindet sich jedoch der Sammler, in dem eine hohe Temperatur herrscht, der Stahl normalerweise nicht standhält. Es sind daher besondere Konstruktionen aus hitzebeständigen Stählen erforderlich, die gegen die Temperatur im Sammler abgeschirmt sind. Solche Stähle sind äußerst teuer und schwer verarbeitbar.

Der Erfindung liegt die Aufgabe zugrunde, einen Solarempfänger zu schaffen, bei dem die Tragstruktur kostengünstig herstellbar ist und auch für großflächige Empfangsflächen geeignet ist.

Die Lösung dieser Aufgabe erfolgt erfindungsgemäß mit den im Patentanspruch 1 angegebenen Merkmalen. Hiernach bildet die Doppelwand eine strukturelle Einheit (Tragstruktur). Sie weist eine Frontwand und eine Rückenwand auf, die durch luftdurchlässige Verstärkungswände verbunden sind. Auf diese Weise bildet die Doppelwand eine integrale schalenförmige Tragstruktur, wobei die Frontwand und die Rückenwand sowie die diese beiden Wände verbindenden Verstärkungswände eine Tragstruktur mit hohem Widerstandsmoment ergeben. Diese Tragstruktur ist von der Kühlluft durchströmt, so dass sie ständig gekühlt wird. Daher kann sie aus einem normalen Stahl hergestellt werden, beispielsweise aus Kraftwerksstahl. Die Doppelwand kann in ihrer Gesamtheit oder abschnittsweise vorgefertigt werden. Sie bildet einen Kasten von hoher Tragfähigkeit. Die Verstärkungswände sind luftdurchlässig, d.h. sie sind mit Durchbrechungen versehen, um den Kühlluftstrom nicht zu blockieren. Allerdings können neben luftdurchlässigen Verstärkungswänden auch solche Verstärkungswände vorhanden sein, die luftundurchlässig sind, und die beispielsweise in vertikaler Richtung verlaufen, in der auch die Kühlluft strömt.

Bei dem erfindungsgemäßen Solarempfänger bildet die Doppelwand eine stabile Konstruktion und feste Einheit, wobei die Verstärkungselemente in das Innere der Kühlluft führenden Doppelwand integriert sind und somit ebenfalls gekühlt werden. Daher ist eine separate Kühlung oder eine Isolation der tragenden Strukturteile nicht erforderlich.

Gemäß einer bevorzugten Ausgestaltung der Erfindung besteht die Doppelwand aus miteinander verbundenen kastenartigen Modulen. Solche Module sind selbsttragend und sie können zu einer größeren Fläche nebeneinander gesetzt werden. Dabei können auch bogenförmige (konvexe) Strukturen realisiert werden. Insbesondere besteht die Möglichkeit, den Solarempfänger kreisförmig bzw. zylindrisch auszubilden, so dass er von allen Seiten Wärmenergie empfangen kann. Aus ebenflächigen Modulen können auch Polygonstrukturen zusammengesetzt werden. Die Module können in beliebiger Weise nebeneinander gesetzt und übereinander gesetzt werden, so dass dadurch Solarempfänger unterschiedlichster Gestalt und Größe zusammengestellt werden können. Die Module sollten mit Verbindungselementen ausgestattet sein, die ein einfaches und schnelles Verbinden benachbarter Module ermöglichen. Allerdings sollten benachbarte Module gleitend miteinander verbunden sein, so dass sie sich an unterschiedliche thermische Ausdehnungen anpassen.

Im Folgenden wird ein Ausführungsbeispiel der Erfindung unter Bezugnahme auf die Zeichnungen näher erläutert.

Es zeigen:
- Fig. 1: eine schematische Darstellung des Solarempfängers, teilweise aufgebrochen,
- Fig. 2: in vergrößertem Maßstab einen Schnitt entlang der Linie II-II von Fig. 1.
- Fig. 3: eine perspektivische Darstellung eines Moduls der doppelwandigen Struktur
- Fig. 4: eine Seitenansicht aus Richtung des Pfeiles IV von Fig. 3 und
- Fig. 5: einen Horizontalschnitt entlang der Linie V-V von Fig. 3.

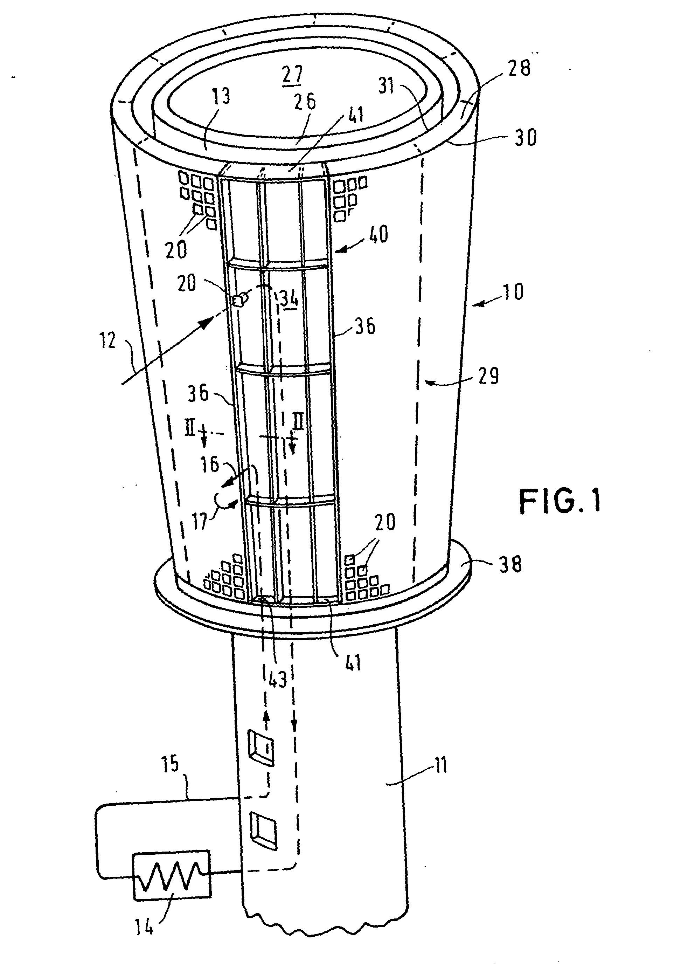

Der in Fig. 1 dargestellte Solarempfänger 10 ist als Turmreceiver auf einem Turm 11 montiert. Auf den Solarempfänger 10 sind zahlreiche Spiegel gerichtet, die in Bodennähe in einem Heliostatfeld angeordnet sind und das Sonnenlicht auf die Umfangsfläche des zylindrischen Solarempfängers 10 fokussieren. Im Solarempfänger 10 wird eingesaugte Luft, die mit dem Pfeil 12 in Fig. 1 angedeutet ist, auf eine hohe Temperatur von über 800°C erwärmt und in einen Sammler 13 geleitet. Von dem Sammler 13 wird die Heißluft einem Wärmetauscher 14 zugeführt, wo die Wärme an ein flüssiges Wärmeübertragungsmedium abgegeben wird. Von dem Wärmetauscher 14 führt eine Kühlluftleitung 15 zurück in den Solarempfänger, um diesen zu kühlen und an den Absorberkörpern vorbei aus dem Solarempfänger auszutreten, was durch den Pfeil 16 angedeutet ist. Ein Teil der austretenden Kühlluft wird anschließend gemäß den Pfeilen 17 umgelenkt und zum Teil wieder in die Absorberkörper hineingesaugt.

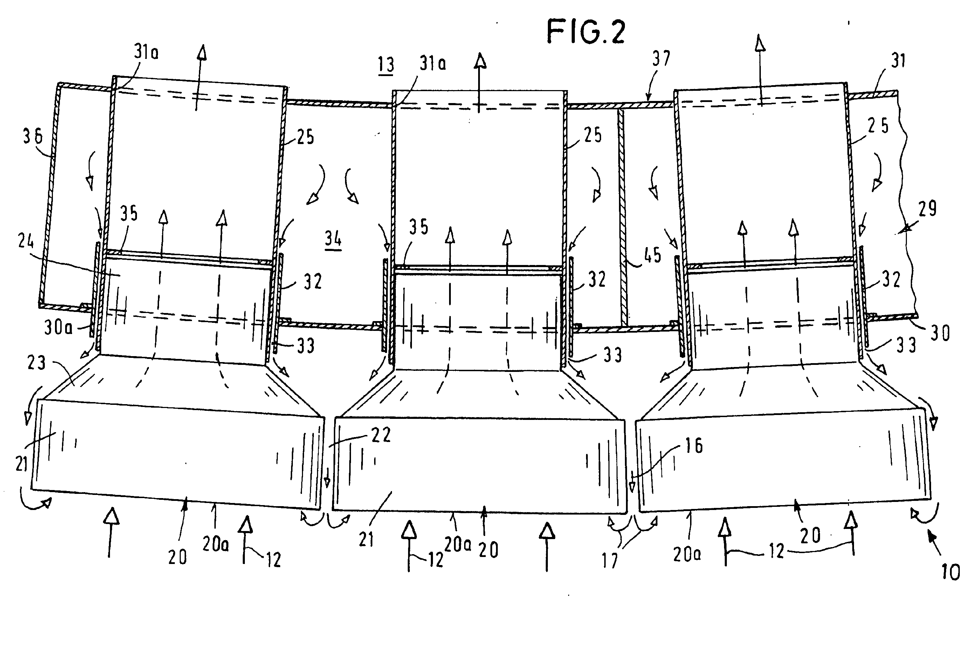

Die Struktur des Solarempfängers ist am besten aus Fig. 2 zu erkennen. Der Solarempfänger weist zahlreiche poröse Absorberkörper 20 auf, die offenporig sind und von Luft durchströmt werden können und aus hochtemperaturbeständiger Keramik besteht. Die Außenflächen 21a der Absorberkörper bilden die Bestrahlungsfläche, welche die Empfangsfläche für die konzentrierte Solarstrahlung bildet. Die Außenfläche 21a ist Bestandteil eines Empfangsteils 21 des Absorberkörpers 20. Bei dem vorliegenden Ausführungsbeispiel sind die Außenflächen 21a quadratisch, die Empfangsteile 21 zweier benachbarter Absorberkörper 20 sind mit gegenseitigen Abständen angeordnet, so dass sich zwischen ihnen ein Spalt 22 befindet. An der Außenseite bilden die Absorberkörper 20 eine Art Schachbrettmuster, wobei die einzelnen Felder, nämlich die Außenflächen 21a durch horizontale und vertikale Spalte 22 getrennt sind.

Hinter dem Empfangsteil 21 weist der Absorberkörper 20 einen Verjüngungsbereich 23 auf, der pyramidenstumpfförmig ausgebildet ist und in einen runden rückwärtigen Bereich 24 übergeht. Der rückwärtige Bereich 24 sitzt in einem passenden Rohr 25, das aus hochtemperaturbeständigem Stahl oder aus Keramik besteht und die Luft, die den Absorberkörper 20 passiert hat und in diesem erhitzt worden ist, nach hinten in den Sammler 13 weiterleitet. Der Sammler 13 bildet einen Hohlraum des turmförmigen Solarempfängers. Er kann eine Innenwand 26 (Fig. 1) aufweisen, die einen Aufnahmeraum 27 für benötigte Komponenten umschließt. Die Innenwand 26 besteht aus hochtemperaturbeständigem Material, da im Sammler 13 extrem hohe Temperaturen herrschen, denen normaler Stahl nicht Stand halten kann. Der Sammler 13 ist ein Ringraum, der außen von der Doppelwand 28 des Solarempfängers begrenzt wird.

Die Doppelwand 29 weist eine Frontwand 30 und eine im Abstand davon angeordnete Rückenwand 31 auf. Die Frontwand 30 enthält Öffnungen 30a, in denen Leitrohre 32 befestigt sind. Durch jedes Leitrohr 32 führt ein Rohr 25 hindurch, wobei zwischen dem Rohr 25 und dem Leitrohr 32 ein ringförmiger Kühlluftauslass 33 vorgesehen ist, welcher aus dem Hohlraum 34 der Doppelwand 29 herausführt. Die Rückenwand 31 enthält Öffnungen 31a, durch die die Rohre 25 passend und abdichtend hindurchgehen. Jedes Rohr 25 enthält eine den Luftstrom drosselnde Blende 35, wobei die Blenden ausgewechselt werden können, um eine gleichmäßige Verteilung der Luftströme auf die Rohre 25 zu erreichen.

Der Solarempfänger 10 kann erhebliche Abmessungen haben, beispielsweise eine Höhe von 8 Meter und einen Durchmesser von ebenfalls etwa 8 Meter. Da die wesentlichen Komponenten des Solarempfängers sehr hohe Temperaturen annehmen können, ist es schwierig, die erforderliche Festigkeit in Konstruktion und Anbringung des Solarempfängers zu erhalten. In den Sammler 13 können keine strukturellen tragenden oder befestigenden Teile untergebracht werden, da solche Teile wegen der hohen Temperaturen zerstört würden.

Erfindungsgemäß ist die Frontwand 30 mit der Rückenwand 31 durch Seitenwände 36 zu einer strukturellen Einheit 37 verbunden, welche Seitenwände 36 als Querwände, eine Frontwand 30 und eine Rückenwand 31 aufweist. Diese strukturelle Einheit ist bei dem vorliegenden Ausführungsbeispiel ein selbsttragender Ring, der auf einer Plattform 38 des Turmes 11 montiert ist.

Die strukturelle Einheit 37 besteht aus mehreren gleichartigen kastenförmigen Modulen 40, die zu der zylindrischen Konfiguration des Absorberkörpers zusammengesetzt sind und daher konvexe Form haben. Jedes Modul 40 weist eine bogenförmige Frontwand 30, eine ebenfalls bogenförmige Rückenwand 31, Seitenwände 36 sowie eine Oberwand 41 und eine Bodenwand 42 auf. In der Bodenwand 42 befindet sich ein Kühllufteinlass 43, durch den gemäß Fig. 1 abgekühlte Luft in den Hohlraum 34 des Moduls 40 einströmt. Diese Luft verlässt den Hohlraum 34 durch die zahlreichen ringförmigen Kühlluftauslässe 33 (Fig. 2), die die Rohre 25 umgeben.

Der Hohlraum 34 des Moduls 40 enthält vertikale Verstärkungswände 45 und horizontale Verstärkungswände 46. Diese Verstärkungswände enthalten Durchbrechungen 47, welche sicherstellen, dass der gesamte Hohlraum 34 des Moduls 40 von der Kühlluft gleichmäßig durchsetzt wird, bzw. dass die Kühlluft in alle Bereiche des Hohlraums hineingelangt.

In der Frontwand 30 des Moduls befinden sich zahlreiche Löcher 30a, in denen die Leitrohre 32 befestigt sind. In der Rückenwand 31 befinden sich ebenfalls zahlreiche Löcher 31a, in denen die Rohre 25 befestigt sind. Die Löcher 31a werden jeweils von den Rohren 25 vollständig und abdichtend ausgefüllt. Die Rohre 25 sind somit an der Rückenwand 31 befestigt, von der sie sich ohne Abstützung durch die Löcher 30a der Frontwand hindurcherstrecken.

In denjenigen Abschnitt des Rohres 25, der von dem Leitrohr 32 umgeben ist, ist der rückwärtige Bereich 24 des Absorberkörpers 20 passend eingesetzt, so dass der Absorberkörper 20 von dem Rohr 25 gehalten wird. Die Heißluft, die in dem Absorberkörper 20 aufgeheizt wurde, strömt durch das Rohr 25 in den Sammler 13. Da der Hohlraum 34, durch den die Rohre 25 verlaufen, von Kühlluft durchströmt ist, werden die Rohre 25 an ihrer Außenseite gekühlt. Damit wird verhindert, dass die Rohre die hohe Temperatur der Heißluft annehmen können.

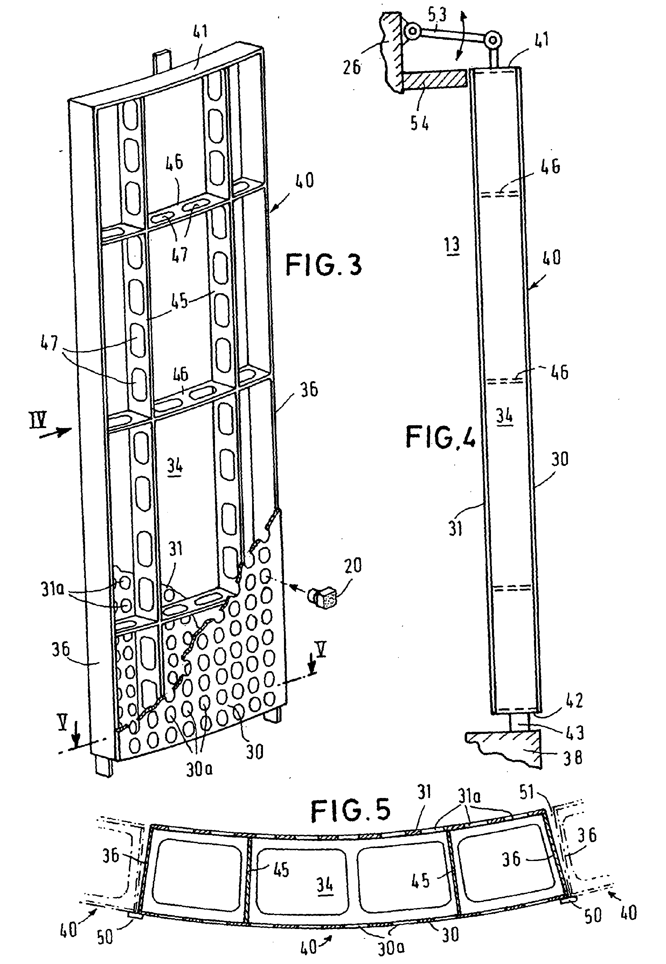

Die einzelnen Module 40 erstrecken sich bei dem vorliegenden Ausführungsbeispiel gemäß Fig. 1 über die gesamte Höhe des Solarempfängers 10. Gemäß Fig. 5 sind benachbarte Module an der Frontseite durch Verbindungsvorrichtungen 50 verbunden. Die Seitenwände 36 zweier benachbarter Module 40 liegen nicht flächig aneinander an, sondern bilden einen Hohlkeil 51, so dass die Module an derjenigen Seite, die den Verbindungsvorrichtungen 50 abgewandt ist, dehnungsbeweglich sind und sich frei ausdehnen können.

Um thermische Ausdehnungen zu ermöglichen und Materialspannungen zu verhindern, sind die Module 40 an ihrer Oberseite mit einem Lenker 53 an der Innenwand 26 befestigt. Der Lenker 53 ermöglicht eine thermische Längenausdehnung des Moduls 40 in vertikaler Richtung. In Fig. 4 ist auch die Oberwand 54 erkennbar, die den Sammler 13 nach oben hin abschließt, so dass die Heißluft nicht nach oben entweichen kann.

## Patentansprüche

1. Solarempfänger mit zahlreichen porösen Absorberkörpern (20), die an der Frontseite einer Doppelwand (29) angeordnet und mit durch die Doppelwand hindurchgehenden Rohren (25) verbunden sind, welche in einen Sammler (13) führen, und mit einem in der Doppelwand enthaltenen Hohlraum (34), der einen Kühllufteinlass (43) und zahlreiche, die Rohre umgebende Kühlluftauslässe (33) aufweist,
**dadurch gekennzeichnet,**
**dass** die Doppelwand (29) eine strukturelle Einheit (37) bildet und eine Frontwand (30) und eine Rückenwand (31) aufweist, die durch Querwände (36) verbunden sind.

2. Solarempfänger nach Anspruch 1, **dadurch gekennzeichnet, dass** die Einheit (37) luftdurchlässige Verstärkungswände (45,46) enthält.

3. Solarempfänger nach Anspruch 1 oder 2, **dadurch gekennzeichnet, dass** die Doppelwand (29) aus miteinander verbundenen kastenartigen Modulen (40) besteht.

4. Solarempfänger nach Anspruch 3, **dadurch gekennzeichnet, dass** die Module (40) zu einer konvexen Innenwand zusammengesetzt sind, die den Sammler 13 mindestens teilweise umschließt.

5. Solarempfänger nach Anspruch 4, **dadurch gekennzeichnet, dass** die konvexe Innenwand im Wesentlichen zylindrisch oder teilzylindrisch ist.

6. Solarempfänger nach einem der Ansprüche 3-5, **dadurch gekennzeichnet, dass** die Module (40) vertikale und/oder horizontale durchbrochene Verstärkungswände (45,46) enthalten.

7. Solarempfänger nach einem der Ansprüche 3-5, **dadurch gekennzeichnet, dass** benachbarte Module (40) gleitend miteinander verbunden sind.

8. Solarempfänger nach einem der Ansprüche 1-7, **dadurch gekennzeichnet, dass** die Doppelwand (29) am unteren Ende einen Kühllufteinlass (43) aufweist und am oberen Ende geschlossen ist.

9. Solarempfänger nach einem der Ansprüche 1-8, **dadurch gekennzeichnet, dass** die Doppelwand (29) aus Stahl besteht und durch die hindurchströmende Kühlluft gekühlt wird.

10. Solarempfänger nach Anspruch 3, **dadurch gekennzeichnet, dass** zwei benachbarte Module (40) nur an ihrer Vorderseite oder an ihrer Rückseite durch Verbindungsvorrichtungen (50) verbunden sind, während die gegenüberliegende Seite dehnungsbeweglich angeordnet ist.

## Claims

1. A solar receiver comprising a plurality of porous absorber bodies (20) arranged on the front face of a double wall (29) and communicated with pipes (25) passing through the double wall, said pipes leading to a collector (13), and comprising a cavity (34) included in the double wall, said cavity comprising a cooling air inlet (43) and a plurality of cooling air outlets (33) surrounding said pipes,
**characterized in**
**that** the double wall (29) forms a structural unit (37) and has a front wall (30) and a rear wall (31) interconnected by transversal walls (36).

2. The solar receiver of claim 1, **characterized in that** the unit (37) includes air-permeable reinforcing walls (45, 46).

3. The solar receiver of claim 1 or 2, **characterized in that** the double wall (29) is formed by interconnected box-like modules (40).

4. The solar receiver of claim 3, **characterized in that** the modules (40) are assembled to a convex inner wall that surrounds the collector (13) at least in part.

5. The solar receiver of claim 4, **characterized in that** the convex inner wall is substantially cylindrical or partly cylindrical.

6. The solar receiver of one of claims 3-5, **characterized in that** the modules (40) comprise vertical and/or horizontal perforated reinforcing walls (45, 46).

7. The solar receiver of one of claims 3-5, **characterized in that** adjacent modules (40) are slidably interconnected.

8. The solar receiver of one of claims 1-7, **characterized in that** the double wall (29) has a cooling air inlet (43) at the lower end and that it is closed at the upper end.

9. The solar receiver of one of claims 1-8, **characterized in that** the double wall (29) is made of steel and that it is cooled by the cooling air flowing through.

10. The solar receiver of claim 3, **characterized in that** two adjacent modules (40) are interconnected only at their front or their rear by connecting means (50), whereas the opposite side is arranged in a manner allowing for expansion movement.

## Revendications

1. Récepteur solaire comprenant plusieurs corps absorbeurs (20) poreux, prévus à la face avant d'une paroi double (29), et étant reliés à des tuyaux passant à travers ladite paroi double, les tuyaux menant dans un collecteur (13), et comprenant une cavité (34) existant dans la paroi double et étant prévue d'une entrée d'air de refroidissement (43) et plusieurs sorties d'air de refroidissement (33) entourant les tuyaux,
**caractérisé en que**
la paroi double (29) forme un ensemble structurelle (37) et comprend une paroi avant (30) et une paroi arrière (31) reliées entre elles par des paroi transversales (36).

2. Récepteur solaire selon la revendication 1, **caractérisé en ce que** l'ensemble (37) comprend des parois de renforcement (45, 46) perméables à l'air.

3. Récepteur solaire selon la revendication 1 ou 2, **caractérisé en ce que** la paroi double (29) est formée par des modules (40) du type caisson reliés entre eux.

4. Récepteur solaire selon la revendication 3, **caractérisé que** les modules (40) sont assemblés pour forme une paroi intérieure convexe entourant le collecteur (13) au moins partiellement.

5. Récepteur solaire selon la revendication 4, **caractérisé en ce que** la paroi intérieure est sensiblement cylindrique ou partiellement cylindrique.

6. Récepteur solaire selon une des revendications 3-5, **caractérisé en ce que** les modules (40) comprennent des parois de renforcement (45, 46) verticales et/ou horizontales perforées.

7. Récepteur solaire selon une des revendications 3-5, **caractérisé en ce que** des modules (40) voisins sont reliés d'une manière glissante.

8. Récepteur solaire selon une des revendications 1-7, **caractérisé en ce que** la paroi (29) comprend une entrée d'air de refroidissement (43) à l'extrémité basse et qu'elle est fermée à l'extrémité haute.

9. Récepteur solaire selon une des revendications 1-8, **caractérisé en ce que** la paroi double (29) est en acier et qu'elle est refroidie par l'air froid y passant.

10. Récepteur solaire selon la revendication 3, **caractérisé en ce que** deux modules (40) voisins sont reliés par des moyens de liaison (50) seulement à leur face avant ou à leur face arrière, tandis que la face opposée est mobile avec expansion.
